# EUROPEAN PATENT APPLICATION

(11) **EP 4 708 963 A1**
(43) Date of publication of application: **11.03.2026**
(21) Application number: 24842197.6
(22) Date of filing: 03.07.2024
(51) Int. Cl.: H04W 36/00

(54) **SATELLITE COMMUNICATION-BASED COMMUNICATION METHOD AND APPARATUS**

(30) Priority: 17.07.2023 CN 202310873366
(71) Applicant: Huawei Technologies Co., Ltd., Shenzhen, Guangdong 518129 (CN)
(72) Inventor: CHEN, Ying, Shenzhen, Guangdong 518129 (CN); QIAO, Yunfei, Shenzhen, Guangdong 518129 (CN); WANG, Jun, Shenzhen, Guangdong 518129 (CN)
(74) Representative: Körber, Martin Hans
(86) International application number: PCT/CN2024/103314
(87) International publication number: WO 2025/016201

(57) **Abstract**

A communication method and apparatus based on satellite communication are provided. The method includes: After determining a first RNA of a terminal at a first moment, a first apparatus may determine, based on the first RNA, that one or more first satellites are target serving access network devices of the terminal. The first RNA includes a service area corresponding to a part or all of cells of N satellites, and the first satellite is a satellite among the N satellites. The first apparatus may send a context of the terminal to the first satellite; or the first apparatus indicates one or more second satellites to send a context of the terminal to the first satellite.

## Description

### CROSS-REFERENCE TO RELATED APPLICATIONS

This application claims priority to Chinese Patent Application No. 202310873366.9, filed with the China National Intellectual Property Administration on July 17, 2023 and entitled "SATELLITE-BASED COMMUNICATION METHOD AND APPARATUS", which is incorporated herein by reference in its entirety.

### TECHNICAL FIELD

This application relates to the field of communication technologies, and in particular, to a satellite-based communication method and apparatus.

### BACKGROUND

To balance terminal power consumption and service transmission latency, an inactive (inactive) state is introduced. When a terminal is in the inactive state, the terminal has no service transmission, and the power consumption is low. In this case, the terminal and an access network device are disconnected, but the access network device and a core network device are still in a connected state. In this way, when a service of the terminal is restored, the service transmission latency is small.

When the terminal enters the inactive state from the connected state, the access network device configures a radio access network-based notification area (RAN-based notification area, RNA) for the terminal. If the terminal moves within the RNA, the terminal does not need to notify the network side. If the terminal moves out of the RNA, the terminal needs to initiate an RNA update procedure.

Currently, the RNA is mainly used in terrestrial communication scenarios. How to use the RNA in non-terrestrial network (non-terrestrial network, NTN) communication scenarios needs to be further studied.

### SUMMARY

This application provides a communication method and apparatus, to use an RNA in an NTN communication scenario.

According to a first aspect, an embodiment of this application provides a communication method. The method may be performed by a first apparatus. The first apparatus may be a terminal, an access network device, or a core network device, may be a module, for example, a chip, a chip system, or a processor, used in a terminal, an access network device, or a core network device, or may be a logical node, a logical module, or software that can implement all or a part of functions of a terminal, an access network device, or a core network device.

The method includes: The first apparatus determines a first RNA of a terminal at a first moment, where the first RNA includes a service area corresponding to a part or all of cells of N satellites, and N is a positive integer. The first apparatus may determine, based on the first RNA, that one or more first satellites are target serving access network devices of the terminal, where the first satellite is a satellite among the N satellites. Then, the first apparatus may send a context of the terminal to the first satellite; or the first apparatus indicates one or more second satellites to send a context of the terminal to the first satellite.

According to the method, an RNA may be used in an NTN communication scenario. In addition, in the method, the first apparatus may send the context of the terminal to the first satellite in the first RNA based on the first RNA, or indicate the second satellite to send the context of the terminal to the first satellite, so that an access network device in an updated RNA can obtain the context of the terminal in time. In this way, when the terminal needs to perform uplink transmission and/or downlink transmission, the access network device in the updated RNA can quickly provide a service for the terminal, to reduce service transmission latency of the terminal.

In a possible design, the first apparatus may further determine a second RNA of the terminal at a second moment. The second RNA is different from the first RNA, the second RNA includes a service area corresponding to a part or all of cells of M satellites, and M is a positive integer. In this way, RNAs of the terminal may be different at different moments, so that the RNA of the terminal can be flexibly set.

Optionally, the difference between the first RNA and the second RNA may be determined based on mobility of the N satellites and mobility of the M satellites. In this way, the RNA may be updated based on the mobility of the satellite, so that the RNA is applicable to the NTN communication scenario.

In some possible manners, before the first apparatus determines the second RNA of the terminal at the second moment, the first apparatus may further receive first information, where the first information includes indication information of the second RNA. In this manner, the first apparatus may accurately determine the second RNA of the terminal at the second moment based on the first information.

In some other possible manners, the first apparatus may determine the second RNA based on the mobility of the M satellites at the second moment. In this manner, the first apparatus may determine the second RNA based on the mobility of the M satellites at the second moment, so that the indication information of the second RNA does not need to be transmitted, to reduce signaling overheads.

In some possible implementations, before the first apparatus determines the first RNA of the terminal at the first moment, the first apparatus may receive second information, where the second information includes indication information of the first RNA. In this implementation, the first apparatus may accurately determine the first RNA of the terminal at the first moment based on the second information.

In some other possible implementations, the first apparatus determines the first RNA based on the mobility of the N satellites at the first moment. In this implementation, the first apparatus may determine the first RNA based on the mobility of the N satellites at the first moment, so that the indication information of the first RNA does not need to be transmitted, to reduce signaling overheads.

In a possible design, the first apparatus may determine, based on an ephemeris of the second satellite and an ephemeris of the first satellite, that the first satellite is the target serving access network device of the terminal. According to this design, the first apparatus can quickly and accurately determine that the first satellite is the target serving access network device of the terminal.

In a possible design, the first apparatus is the first satellite. The first apparatus may send third information to a core network device, where the third information indicates that the first satellite is the target serving access network device of the terminal. According to this design, the core network device may update a parameter indicating the target serving access network device of the terminal without triggering an RNA update procedure by the terminal, to reduce signaling overheads.

Optionally, a third satellite is any one of the N satellites, and there is a communication interface between the third satellite and one or more of the N satellites. In this way, any one of the N satellites may directly or indirectly communicate with another satellite in the N satellites.

In a possible design, the first apparatus is the terminal. When the third satellite is a serving access network device of the terminal, and the terminal is no longer located in a service range of the third satellite, the first apparatus selects a satellite in the one or more satellites for communication. Optionally, a movement direction of the one or more satellites is the same as a movement direction of the third satellite. Because there is a communication interface between the third satellite and the one or more satellites, according to this design, the selected satellite may obtain the context of the terminal from the third satellite, so that a service can be quickly provided for the terminal, to reduce service latency of the terminal. In addition, according to this design, the terminal can be prevented from frequently falling back to an idle state.

According to a second aspect, an embodiment of this application provides a communication method. The method may be performed by a first apparatus. The first apparatus may be a terminal, an access network device, or a core network device, may be a module, for example, a chip, a chip system, or a processor, used in a terminal, an access network device, or a core network device, or may be a logical node, a logical module, or software that can implement all or a part of functions of a terminal, an access network device, or a core network device.

The method includes: The first apparatus determines a first RNA of a terminal at a first moment, where the first RNA includes a service area corresponding to a part or all of cells of N satellites, N is a positive integer, and the N satellites are satellites in a first orbit. The first apparatus may determine, based on the first RNA, that one or more first satellites are target serving access network devices of the terminal, where the first satellite is a satellite among the N satellites.

According to the method, an RNA may be used in an NTN communication scenario. In addition, in the method, the first satellite stores a context of the terminal. In this way, when the terminal needs to perform uplink transmission and/or downlink transmission, an access network device other than the first satellite in the first RNA may conveniently obtain the context of the terminal from the first satellite, so that a service can be quickly provided for the terminal, to reduce service transmission latency of the terminal.

In a possible design, before the first apparatus determines the first RNA of the terminal at the first moment, the first apparatus may receive second information. The second information includes indication information of the first RNA, and the indication information of the first RNA includes at least one of the following: indication information of a part or all of the N satellites or indication information of the first orbit. According to this design, the first apparatus may quickly and accurately determine the first RNA based on the second information. In addition, when the indication information of the first RNA includes at least one of the following: indication information of a part of the N satellites or the indication information of the first orbit, the second information does not need to include indication information of all the satellites corresponding to the first RNA, to reduce signaling overheads.

Optionally, a third satellite is any one of the N satellites, and there is a communication interface between the third satellite and one or more of the N satellites. In this way, any one of the N satellites may directly or indirectly communicate with another satellite in the N satellites.

In a possible design, the first apparatus is the terminal. When the third satellite is a serving access network device of the terminal, and the terminal is no longer located in a service range of the third satellite, the first apparatus selects a satellite in the one or more satellites for communication. Optionally, a movement direction of the one or more satellites is the same as a movement direction of the third satellite. Because there is a communication interface between the third satellite and the one or more satellites, according to this design, the selected satellite may obtain the context of the terminal from the third satellite, so that a service can be quickly provided for the terminal, to reduce service latency of the terminal. In addition, according to this design, the terminal can be prevented from frequently falling back to an idle state.

According to a third aspect, an embodiment of this application provides a communication apparatus, including units configured to perform the steps in any one of the foregoing aspects.

According to a fourth aspect, an embodiment of this application provides a communication apparatus, including a processor. The processor is configured to perform the methods described in the foregoing aspects.

Optionally, the apparatus may further include a memory, configured to store instructions and data. The memory is coupled to the processor. When executing the instructions stored in the memory, the processor may implement the methods described in the foregoing aspects.

According to a fifth aspect, an embodiment of this application provides a communication system, including a first apparatus configured to perform the method provided in the first aspect or the second aspect.

Optionally, when the first apparatus is a terminal, the communication system may further include at least one of the following: a first satellite, a second satellite, or a core network device. When the first apparatus is a core network device, the communication system may further include at least one of the following: a terminal, a first satellite, or a second satellite. When the first apparatus is a first satellite, the communication system may further include at least one of the following: a terminal, a second satellite, or a core network device. When the first apparatus is a second satellite, the communication system may further include at least one of the following: a terminal, a first satellite, or a core network device.

According to a sixth aspect, an embodiment of this application further provides a computer program product including computer-executable instructions. When the computer program product is run, some or all steps of the method in any one of the foregoing aspects are performed.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects.

According to an eighth aspect, an embodiment of this application further provides a chip. The chip is configured to read a computer program stored in a memory, to perform the method provided in any one of the foregoing aspects.

Optionally, the chip is coupled to the memory, or the memory is a part of the chip.

According to a ninth aspect, an embodiment of this application further provides a chip system. The chip system includes a processor configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the third aspect to the ninth aspect, refer to descriptions of technical effects that can be achieved in any one of the possible designs in the first aspect or the second aspect. Repeated parts are not described.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

To describe the technical solutions in embodiments of this application more clearly, the following describes a communication method and apparatus provided in embodiments of this application in detail with reference to the accompanying drawings.

The communication method and apparatus provided in embodiments of this application may be applied to a non-terrestrial network (non-terrestrial network, NTN) communication scenario. An NTN communication system may perform networking by using devices such as an uncrewed aerial vehicle, a high altitude platform (high altitude platform station, HAPS), and a satellite, and provide services such as data transmission and voice communication for a terminal. In addition, the NTN system may further include another air network device. This is not limited in this application.

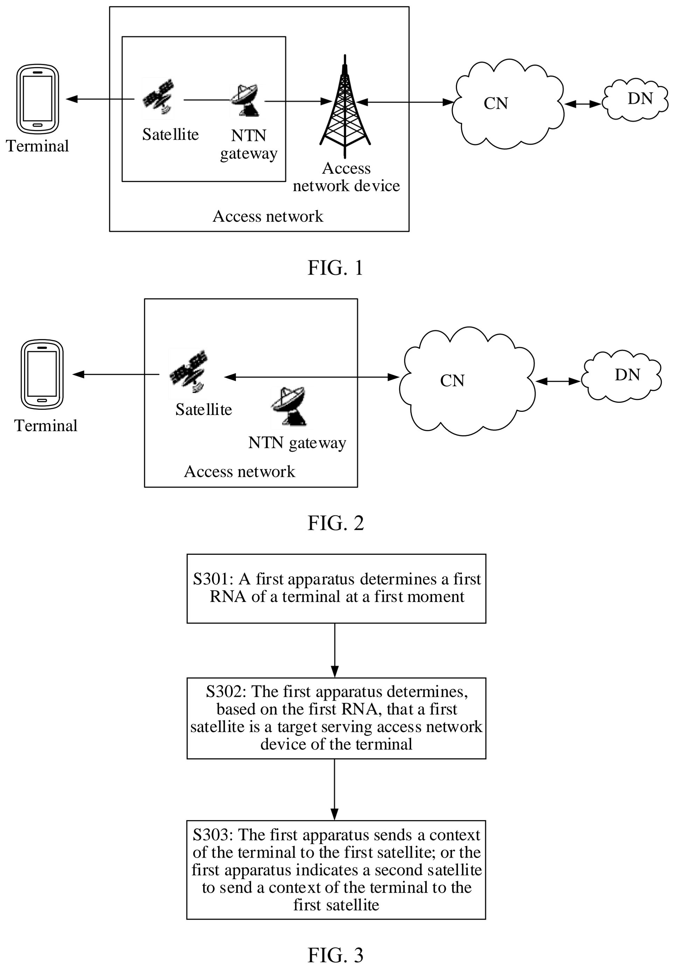

For example, FIG. 1 is a diagram of an NTN scenario to which an embodiment of this application is applicable. The NTN scenario may be an application scenario of a transparent forwarding architecture. In the scenario shown in FIG. 1, a terminal may communicate with a core network (core network, CN) through an access network, and may be connected to a data network (data network, DN) through the CN. A satellite and an NTN gateway (gateway) may be used as relay devices between the terminal and an access network device, or as remote radio units (remote radio units, RRUs) of an access network device.

For example, FIG. 2 is a diagram of another NTN scenario to which an embodiment of this application is applicable. The NTN scenario may be an application scenario of a regenerative architecture. In the scenario shown in FIG. 2, a satellite may be used as an access network device, form an access network with an NTN gateway, and communicate with a core network through the NTN gateway. In addition, the satellite may further provide a wireless access service for a terminal. FIG. 2 shows an example of a regenerative satellite architecture without an inter-satellite link.

It should be noted that FIG. 1 and FIG. 2 show only one satellite and one NTN gateway. In actual use, an architecture with a plurality of satellites and/or a plurality of NTN gateways may be used based on a requirement. Each satellite may provide a service for one or more terminals, each NTN gateway may correspond to one or more satellites, and each satellite may correspond to one or more NTN gateways. This is not specifically limited in embodiments of this application.

It should be noted that FIG. 1 and FIG. 2 are merely examples of the NTN scenarios, and the NTN scenarios may further include another specific scenario. This is not limited in this application.

Devices in embodiments of this application include a terminal, an access network device, and a core network device. Specifically:

The terminal may also be referred to as a terminal device, user equipment (user equipment, UE), a mobile station (mobile station, MS), a mobile terminal (mobile terminal, MT), or the like, and is a device that provides voice and/or data connectivity for a user. For example, the terminal may be a handheld device or a vehicle-mounted device having a wireless connection function. Currently, some examples of the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device is a device in a radio access network (radio access network, RAN), and may also be referred to as a RAN device, a node, a base station, or the like.

In a possible scenario, the access network device may be an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, an access node in a Wi-Fi system, or the like. The access network device may be a macro base station, a micro base station, an indoor base station, a relay node, or a donor node. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented by using a software function running on hardware, or may be implemented by using a virtualization function instantiated on a platform (for example, a cloud platform). Alternatively, the access network device in this application may be a logical node, a logical module, or software that can implement all or a part of functions of the access network device.

In another possible scenario, a plurality of access network devices cooperate to assist the terminal in implementing radio access, and different access network devices separately implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

It may be understood that in an NTN network, the access network device may be deployed on a satellite or another non-terrestrial device, or may be deployed on the ground.

The core network device is a device in a core network that provides service support for the terminal. Currently, some examples of the core network device are an access and mobility management function (access and mobility management function, AMF) entity, a session management function (session management function, SMF) entity, a user plane function (user plane function, UPF) entity, and the like. Examples are not listed one by one herein. The AMF entity may be responsible for access management and mobility management of the terminal. The SMF entity may be responsible for session management, for example, user session establishment. The UPF entity may be a function entity on a user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element, an SMF function entity, or the like.

In this application, in the NTN network, the terminal is supported in communicating with a non-terrestrial device. The non-terrestrial device may be used as an aircraft or a satellite that has a processing function of the access network device in a regenerative architecture, or may be used as a relay node or an amplifier that is deployed in the air or an atmosphere and that has a processing function of the access network device in a transparent forwarding architecture. In the architecture shown in FIG. 1 or FIG. 2, the non-terrestrial device may include a satellite (or an aircraft or the like). In the architecture shown in FIG. 1 or FIG. 2, the satellite, the NTN gateway, the access network device, a node in the CN, and a node in the DN may be collectively referred to as a network device, and the NTN gateway and the access network device may be collectively referred to as a terrestrial station.

In this application, "sending information to... (the terminal)" may be understood as that a destination end of the information is the terminal, and may include directly or indirectly sending the information to the terminal. "Receiving information from... (the terminal)" may be understood as that a source end of the information is the terminal, and may include directly or indirectly receiving information from the terminal. Necessary processing, such as format change, may be performed on information between a source end and a destination end of information sending. However, the destination end may understand valid information from the source end. A similar expression in this application may be understood similarly, and details are not described herein again.

A communication system and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of a network architecture and emergence of new service scenarios, the technical solutions provided in embodiments of this application are also applicable to similar technical problems.

The following first explains and describes related terms in embodiments of this application. It should be noted that these explanations are intended to make embodiments of this application easier to understand, but should not be considered as a limitation on the protection scope claimed in this application.

### (1) Radio resource control (radio resource control, RRC) connection state

In a communication system, there are three RRC connection states of a terminal: an RRC connected state (RRC_connected, connected state for short), an RRC idle state (RRC_idle, idle state for short), and an RRC inactive state (RRC_inactive, inactive state for short). The idle state and the inactive state may be collectively referred to as an RRC non-connected state.

When the terminal is in the idle state, an RRC connection between the terminal and an access network device is released (released). The access network device and the terminal no longer store a context of the terminal, and the terminal may receive broadcast information (for example, system information) and a paging message that are sent by the access network device.

When the terminal is in the inactive state, the RRC connection between the terminal and the access network device is suspended (suspended). However, the access network device and the terminal continue storing the context of the terminal, and a connection between the access network device and a core network device is still maintained. When the terminal enters the connected state from the inactive state, the access network device and the terminal may quickly restore the RRC connection between the terminal and the access network device based on the stored context of the terminal, so that the terminal can be quickly restored to the connected state.

When the terminal is in the connected state, there is the RRC connection between the terminal and the access network device, and the terminal and the access network device can communicate based on the RRC connection.

### (2) Ascending orbit and descending orbit

Based on movement directions of a satellite, orbits of the satellite may be classified into the ascending orbit and the descending orbit. When operating in the ascending orbit, the satellite moves in a direction toward the North Pole. When operating in the descending orbit, the satellite moves in a direction toward the South Pole. Because the satellite moves around the earth, one orbit of the satellite includes both the ascending orbit and the descending orbit.

(3) In this application, a service area corresponding to a cell may also be referred to as an area covered by the cell or a service area of the cell.

### (4) RNA

When the terminal enters the inactive state from the connected state, an access network device (for example, a last serving gNB) that serves the terminal last time may send, to the terminal, information indicating the RNA. The RNA may be an area configured by the access network device that serves the terminal last time, and includes a service area of one or more cells. When the terminal moves in the RNA, the terminal does not need to notify a network side. When the terminal moves out of the RNA, the terminal may initiate an RNA update (update) procedure. For example, a service range of an access network device 1 is outside an RNA range. When the terminal moves to the service range of the access network device 1, the terminal may initiate the RNA update procedure, and the access network device 1 may obtain the context of the terminal from the access network device that serves the terminal last time, to provide a service for the terminal.

Currently, the RNA is mainly used in a terrestrial network. How to use the RNA in an NTN communication scenario needs to be further studied. In addition, in the terrestrial network, RNA update is mainly triggered by movement of the terminal. However, in the NTN communication scenario, because an access network device like the satellite also moves, even if the terminal does not move, the terminal may not be located in the original RNA, and RNA update needs to be triggered. How to enable an access network device in an updated RNA to obtain the context of the terminal also needs to be further studied.

Based on this, embodiments of this application provide a communication method. FIG. 3 is a schematic flowchart corresponding to a communication method according to an embodiment of this application. In FIG. 3, an example in which a first apparatus is used as an execution body is used to illustrate the method. However, an execution body of the interaction example is not limited in this application. For example, the first apparatus may be a terminal, an access network device, or a core network device, may be a module, for example, a chip, a chip system, or a processor, used in a terminal, an access network device, or a core network device, or may be a logical node, a logical module, or software that can implement all or a part of functions of a terminal, an access network device, or a core network device. The access network device is, for example, a satellite, and the core network device is, for example, an AMF. The following uses an example in which the first apparatus is the terminal, the access network device, or the core network device for description.

As shown in FIG. 3, the method includes the following steps.

S301: The first apparatus determines a first RNA of a terminal at a first moment.

The first RNA includes a service area corresponding to a part or all of cells of N satellites, and N is a positive integer. A service area of each of the N satellites may correspond to one RAN area, and may correspond to one RAN identifier (identifier, ID). Different satellites have different RAN IDs.

It may be understood that the N satellites may be satellites in a same orbit (for example, a first orbit). Alternatively, the N satellites may be satellites in at least two orbits. For example, the N satellites include a satellite 1, a satellite 2, and a satellite 3. The satellite 1 is a satellite in an orbit 1, and the satellite 2 and the satellite 3 are satellites in an orbit 2.

For example, a third satellite is any one of the N satellites, and there is a communication interface between the third satellite and one or more other satellites in the N satellites. The communication interface is, for example, an Xn interface. For example, the N satellites include the satellite 1, the satellite 2, and the satellite 3. There is a communication interface between the satellite 1 and the satellite 2, and there may also be a communication interface between the satellite 2 and the satellite 3. In this way, any one of the N satellites may directly or indirectly communicate with another satellite in the N satellites.

A manner in which the first apparatus determines the first RNA of the terminal at the first moment is described in the following descriptions of "for S301", and details are not described herein.

S302: The first apparatus determines, based on the first RNA, that a first satellite is a target serving access network device of the terminal, where the first satellite is a satellite among the N satellites corresponding to the first RNA.

The target serving access network device may be an access network device that needs to obtain a context of the terminal. For example, the first satellite is a target serving access network device of the terminal at the first moment. In this way, at the first moment, the first satellite may be a device that needs to obtain the context of the terminal. Optionally, at the first moment, the terminal may be located in a service area of the first satellite. In this way, if the terminal needs to perform uplink transmission and/or downlink transmission, after the first satellite obtains the context of the terminal, the first satellite may quickly provide a service for the terminal.

A manner in which the first apparatus determines that the first satellite is the target serving access network device of the terminal is described in the following descriptions of "for S302", and details are not described herein.

It should be understood that there may be one or more first satellites.

S303: The first apparatus sends the context of the terminal to the first satellite; or the first apparatus indicates a second satellite to send the context of the terminal to the first satellite.

When the first apparatus sends the context of the terminal to the first satellite, the first apparatus may be the second satellite. The second satellite may be a satellite that stores the context of the terminal. For example, the second satellite is a target serving access network device of the terminal at a second moment. The second satellite obtains the context of the terminal at the second moment or before the second moment. When time changes from the second moment to the first moment, the second satellite may send the context of the terminal to the first satellite.

When the first apparatus indicates the second satellite to send the context of the terminal to the first satellite, the first apparatus may be one of the following: the first satellite, the core network device, or the terminal. In this way, the second satellite may send the context of the terminal to the first satellite based on an indication of the first apparatus. For specific content of the second satellite, refer to the foregoing descriptions. Details are not described herein again. For example, after determining that the first satellite is the target serving access network device of the terminal, the first apparatus may send information 1 to the second satellite, where the information 1 indicates that the second satellite can send the context of the terminal to the first satellite.

Optionally, after sending the context of the terminal to the first satellite, the second satellite may delete the locally stored context of the terminal, so that a storage resource of the second satellite can be released in time.

It should be understood that there may be one or more second satellites. The second satellite may belong to the N satellites, or may not belong to the N satellites.

In some possible manners, if the first satellite does not obtain the context of the terminal, the terminal may fall back from a non-connected state to an idle state. For example, if the first satellite does not obtain the context of the terminal, the first satellite may indicate the terminal that the terminal can fall back from the non-connected state to the idle state. After falling back to the idle state, the terminal may initiate a random access procedure to the first satellite. Specific content of the random access procedure is not limited in this application.

According to the method shown in FIG. 3, an RNA may be used in an NTN communication scenario. In addition, in the method, the first apparatus may send the context of the terminal to the first satellite in the first RNA based on the first RNA, or indicate the second satellite to send the context of the terminal to the first satellite, so that an access network device in an updated RNA can obtain the context of the terminal in time. In this way, when the terminal needs to perform uplink transmission and/or downlink transmission, the access network device in the updated RNA can quickly provide a service for the terminal, to reduce service transmission latency of the terminal.

In some possible manners, in the method shown in FIG. 3, RNAs of the terminal may be different at different moments. The following provides descriptions by using an example in which an RNA of the terminal at the first moment is the first RNA, an RNA of the terminal at the second moment is a second RNA, and the second RNA is different from the first RNA.

For content of the first RNA, refer to the descriptions of the first RNA in S301. Details are not described herein again.

The second RNA includes a service area corresponding to a part or all of cells of M satellites, and M is a positive integer. A service area of each of the M satellites may correspond to one RAN area, and may correspond to one RAN ID. Different satellites have different RAN IDs. The M satellites may be completely different from the N satellites, or may partially overlap the N satellites.

It may be understood that there may be a communication interface between any one of the M satellites and one or more other satellites in the M satellites. The communication interface is, for example, an Xn interface. For example, the M satellites include a satellite 4, a satellite 5, and a satellite 6. There is a communication interface between the satellite 4 and the satellite 5, and there is also a communication interface between the satellite 4 and the satellite 6. In this way, any one of the M satellites may directly or indirectly communicate with another satellite in the M satellites.

In some possible manners, the difference between the first RNA and the second RNA is determined based on mobility of the N satellites and mobility of the M satellites. The mobility of the N satellites may be determined based on ephemerides of the N satellites, and the mobility of the M satellites may be determined based on ephemerides of the M satellites. The ephemerides of the N satellites and the ephemerides of the M satellites may be preconfigured, or may be obtained by the first apparatus from another apparatus. For example, it can be learned from the ephemerides of the N satellites that, at the first moment, the service area corresponding to the part or all of cells of the N satellites are a range 1. It can be learned from the ephemerides of the M satellites that, at the second moment, the service area corresponding to the part or all of cells of the M satellites are also the range 1.

Optionally, the steps in the method shown in FIG. 3 may be implemented in the following manners.

### 1. For S301:

The first apparatus may determine the first RNA of the terminal at the first moment in a plurality of manners, for example, a manner a1 or a manner a2.

**Manner a1:** The first apparatus receives second information, where the second information includes indication information of the first RNA. In this way, the first apparatus may determine the first RNA of the terminal at the first moment based on the second information.

The indication information of the first RNA may include indication information (for example, IDs) of the N satellites. In this way, after receiving the second information, the first apparatus may determine the first RNA based on the indication information of the N satellites.

In the manner a1, the first apparatus may be the terminal, the core network device, or the second satellite, and the second satellite is, for example, the target serving access network device of the terminal at the second moment. The following uses examples to describe manners in which the first apparatus receives the second information.

In some examples, the first apparatus is the terminal. When the terminal enters an inactive state from a connected state, an access network device (referred to as an access network device A for short below) that serves the terminal last time may send the second information to the terminal. Correspondingly, the terminal receives the second information from the access network device A.

In some other examples, the first apparatus is the core network device. For example, when the terminal enters an inactive state from a connected state, or an RNA of the terminal changes from the second RNA to another RNA (for example, the first RNA), an access network device A sends the second information to the core network device. Correspondingly, the core network device receives the second information from the access network device A. For another example, at the second moment, the core network device receives the second information from the second satellite, where the second satellite may obtain the second information from an access network device A.

In still some other examples, the first apparatus is the second satellite. For example, when the terminal enters an inactive state from a connected state, an access network device A sends the second information to the second satellite. Correspondingly, the second satellite receives the second information from the access network device A. For another example, when an RNA of the terminal changes, the second satellite receives the second information from the access network device A or another access network device. The another access network device may be a target serving access network device of the terminal before the RNA changes.

Optionally, the second information may further include indication information of the first moment. For example, the indication information of the first moment may be indication information of the first moment, or may be indication information of a time period including the first moment. The indication information of the time period may include a start moment and an end moment of the time period, may include a start moment and duration of the time period, or may include an end moment and duration of the time period.

It should be understood that the second information may be carried in existing information, or may be carried in new information. This is not limited in this application.

In the manner a1, the first apparatus may accurately determine the first RNA of the terminal at the first moment based on the second information.

**Manner a2:** The first apparatus may determine the first RNA based on the mobility of the N satellites at the first moment. In other words, the first RNA is determined based on the mobility of the N satellites at the first moment.

In some possible manners, the first RNA may be an RNA determined when the terminal enters an inactive state from a connected state, and the first apparatus may be an access network device (referred to as an access network device A below) that serves the terminal last time. The first apparatus may determine the first RNA based on the mobility of the N satellites at the first moment and a position 1 at which the terminal enters the inactive state from the connected state. For the mobility of the N satellites, refer to the foregoing descriptions. Details are not described herein again. For example, if the position 1 at which the terminal enters the inactive state from the connected state is in a service range of the satellite 1, the first apparatus may determine that the N satellites include the satellite 1. Then, the first apparatus may select, from A satellites based on ephemerides of the A satellites, the N satellites including the satellite 1, to determine the first RNA. A is a positive integer. The A satellites may include only the N satellites, or may include the N satellites and a satellite other than the N satellites. For a manner of obtaining the ephemerides of the A satellites, refer to the foregoing descriptions of the manner of obtaining the ephemerides of the N satellites. Optionally, service ranges of the N satellites are continuous. In this way, after determining that the N satellites include the satellite 1, the first apparatus may select, from the A satellites based on the ephemerides of the A satellites, the N satellites whose service ranges are continuous with the service range of the satellite 1 at the first moment, to determine the first RNA.

In some other possible manners, the second RNA and the first RNA are respectively RNAs before and after update, and the first apparatus may be the terminal, the core network device, the access network device A, or the second satellite. As described above, the difference between the first RNA and the second RNA is determined based on the mobility of the N satellites and the mobility of the M satellites. Therefore, the first apparatus may determine the first RNA based on the mobility of the N satellites, the mobility of the M satellites, and the second RNA. For example, at the second moment, the service area corresponding to the part or all of cells of the M satellites in the second RNA are the range 1. If at the first moment, the service area corresponding to the part or all of cells of the N satellites in B satellites are the range 1, the first apparatus may determine that the first RNA includes the service area corresponding to the part or all of cells of the N satellites. B is a positive integer. The B satellites may include only the N satellites, or may include the N satellites and a satellite other than the N satellites.

In the manner a2, the first apparatus may determine the first RNA based on the mobility of the N satellites at the first moment, so that indication information of the first RNA does not need to be transmitted, to reduce signaling overheads.

### 2. For S302:

In some possible manners, the first apparatus may determine, based on an ephemeris of the second satellite and ephemerides of N1 satellites in the N satellites, that the first satellite is the target serving access network device of the terminal. The second satellite may be a satellite in the M satellites corresponding to the second RNA, and the second satellite is the target serving access network device of the terminal at the second moment. The N1 satellites include the first satellite, and N1 is a positive integer less than or equal to N. The N1 satellites may include only the first satellite, or may include the first satellite and a satellite other than the first satellite.

For example, the second moment is before the first moment. The second RNA of the terminal at the second moment includes a service area of the satellite 1 and a service area of the satellite 2, and the first RNA of the terminal at the first moment includes the service area of the satellite 2 and a service area of the satellite 3. The second satellite is the satellite 1. The first apparatus may determine, based on ephemerides of the satellite 1 and the satellite 3, that the service range of the satellite 1 at the second moment is the same as the service range of the satellite 3 at the first moment, so that the first apparatus can determine that the satellite 3 is the first satellite, in other words, the satellite 3 is the target serving access network device of the terminal. It should be understood that, in this example, the first apparatus may determine, based only on the ephemerides of the satellite 1 and the satellite 3, that the service range of the satellite 1 at the second moment is the same as the service range of the satellite 3 at the first moment. Alternatively, after determining, based on ephemerides of the satellite 1 and the satellite 2, that the service range of the satellite 1 at the second moment is different from the service range of the satellite 2 at the first moment, the first apparatus may determine, based on the ephemerides of the satellite 1 and the satellite 3, that the service range of the satellite 1 at the second moment is the same as the service range of the satellite 3 at the first moment.

For another example, the second moment is before the first moment. The second RNA of the terminal at the second moment includes a service area of the satellite 1. The first RNA of the terminal at the first moment includes a service area of the satellite 2. The second satellite is the satellite 1. The first apparatus may determine, based on ephemerides of the satellite 1 and the satellite 2, that the service range of the satellite 1 at the second moment is the same as the service range of the satellite 2 at the first moment, so that the first apparatus can determine that the satellite 2 is the first satellite, in other words, the satellite 2 is the target serving access network device of the terminal.

In this manner, the first apparatus can quickly and accurately determine that the first satellite is the target serving access network device of the terminal.

For content of S303, refer to the foregoing descriptions of S303. Details are not described herein again.

In some possible manners, the first apparatus may further determine the second RNA of the terminal at the second moment. The first apparatus may determine the second RNA of the terminal at the second moment in a plurality of manners, for example, a manner b1 or a manner b2.

**Manner b1:** The first apparatus receives first information, where the first information includes indication information of the second RNA. In this way, the first apparatus may determine the second RNA of the terminal at the second moment based on the first information.

The indication information of the second RNA may include indication information (for example, IDs) of the M satellites. In this way, after receiving the first information, the first apparatus may determine the second RNA based on the indication information of the M satellites.

For a manner in which the first apparatus receives the first information, refer to the manner in which the first apparatus receives the second information in the manner a1. Details are not described herein again.

Optionally, the first information further includes indication information of the second moment. For specific content of the indication information of the second moment, refer to the descriptions of the indication information of the first moment in the manner a. Details are not described herein again.

It should be understood that the first information may be carried in existing information, or may be carried in new information. This is not limited in this application.

In the manner b1, the first apparatus may accurately determine the second RNA of the terminal at the second moment based on the first information.

**Manner b2:** The first apparatus may determine the second RNA based on the mobility of the M satellites at the second moment. In other words, the second RNA is determined based on the mobility of the M satellites at the second moment.

The first apparatus may determine content of the second RNA based on the mobility of the M satellites at the second moment. For details, refer to the descriptions of determining the first RNA by the first apparatus based on the mobility of the N satellites at the first moment in the manner a2. Details are not described herein again.

In the manner b2, the first apparatus may determine the second RNA based on the mobility of the M satellites at the second moment, so that the indication information of the second RNA does not need to be transmitted, to reduce the signaling overheads.

In some possible manners, if an access network device that stores the context of the terminal changes from the second satellite to the first satellite, a core network device (for example, an AMF) needs to update a locally stored first parameter from the second satellite to the first satellite. When downlink information needs to be sent to the terminal, the core network device may indicate a satellite in the first parameter to page the terminal.

In some examples, the first apparatus may be the core network device. After S302, the first apparatus may update the locally stored first parameter from the second satellite to the first satellite. In this way, an RNA update procedure triggered by the terminal can be reduced, to reduce the signaling overheads.

In some other examples, the first apparatus is the first satellite. After S302, the first apparatus may send third information to the core network device, where the third information indicates that the first satellite is the target serving access network device of the terminal. After receiving the third information, the core network device may update the locally stored first parameter from the second satellite to the first satellite. The third information may be carried in an existing message (for example, a path switch request message), or may be carried in a new message. This is not limited in this application.

In this manner, the core network device may update the locally stored first parameter from the second satellite to the first satellite without triggering the RNA update procedure by the terminal, to reduce the signaling overheads.

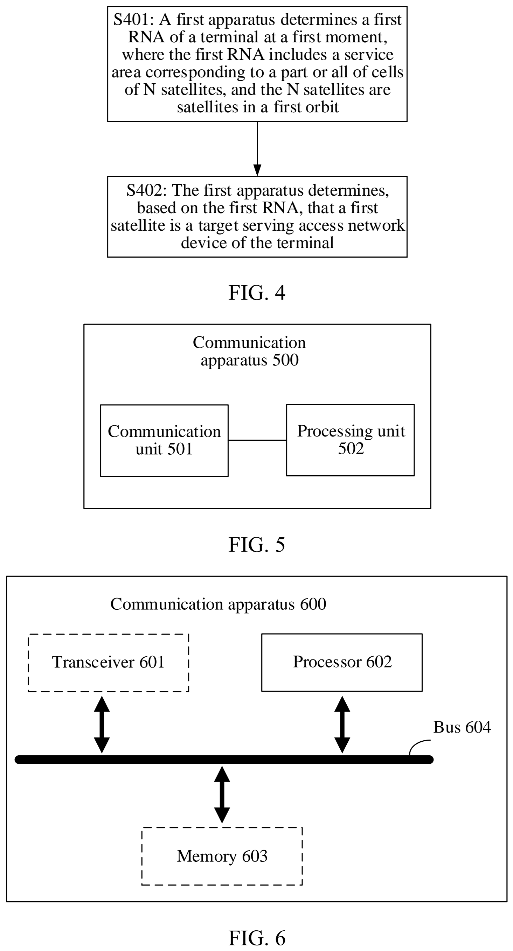

Embodiments of this application further provide a communication method. FIG. 4 is a schematic flowchart corresponding to a communication method according to an embodiment of this application. In FIG. 4, an example in which a first apparatus is used as an execution body is used to illustrate the method. However, an execution body of the interaction example is not limited in this application. For example, the first apparatus may be a terminal, an access network device, or a core network device, may be a module, for example, a chip, a chip system, or a processor, used in a terminal, an access network device, or a core network device, or may be a logical node, a logical module, or software that can implement all or a part of functions of a terminal, an access network device, or a core network device. The access network device is, for example, a satellite, and the core network device is, for example, an AMF. The following uses an example in which the first apparatus is the terminal, the access network device, or the core network device for description.

As shown in FIG. 4, the method includes the following steps.

S401: The first apparatus determines a first RNA of a terminal at a first moment.

The first RNA includes a service area corresponding to a part or all of cells of N satellites, and N is a positive integer. The N satellites are satellites in a first orbit. Optionally, the N satellites may be all satellites in the first orbit. In this way, if the terminal does not move or moves in the first RNA, RNAs of the terminal at different moments are the same, and are all the first RNA.

For content of the first RNA and the N satellites, refer to the descriptions of the first RNA in S301. Details are not described herein again.

The first apparatus may determine the first RNA of the terminal at the first moment in a plurality of manners, for example, a manner c1 or a manner c2.

**Manner c1:** The first apparatus receives second information, where the second information includes indication information of the first RNA. In this way, the first apparatus may determine the first RNA of the terminal at the first moment based on the second information.

There are a plurality of indication manners of the indication information of the first RNA. The following uses examples for description.

In some examples, the indication information of the first RNA includes indication information of the first orbit. In this way, after receiving the second information, the first apparatus may determine, based on the indication information of the first orbit, that the satellites in the first orbit are the N satellites corresponding to the first RNA, to determine the first RNA. For example, the first orbit is an orbit 3, and satellites in the orbit 3 include a satellite 1, a satellite 2, and a satellite 3. The second information includes indication information of the orbit 3. After receiving the second information, the first apparatus may determine that the first RNA includes a service area corresponding to a part or all of cells of the satellite 1, the satellite 2, and the satellite 3. In this example, the second information may include the indication information of the first orbit, and does not need to include indication information of all the satellites corresponding to the first RNA, to reduce signaling overheads.

In some other examples, the indication information of the first RNA includes indication information (for example, an ID) of a part of the N satellites. In this way, after receiving the second information, the first apparatus may determine, based on the indication information of the part of the N satellites, the first orbit in which the part of the satellites is located, to determine that the satellites in the first orbit are the N satellites corresponding to the first RNA, and further determine the first RNA. For example, the first orbit is an orbit 3, and satellites in the orbit 3 include a satellite 1, a satellite 2, and a satellite 3. The second information includes indication information of the satellite 1. After receiving the second information, the first apparatus may determine that an orbit in which the satellite 1 is located is the orbit 3, to determine that the first RNA includes a service area corresponding to a part or all of cells of the satellite 1, the satellite 2, and the satellite 3. In this example, the second information includes the indication information of the part of the N satellites, and does not need to include indication information of all the satellites corresponding to the first RNA, to reduce signaling overheads.

In still some other examples, the indication information of the first RNA may include indication information (for example, IDs) of the N satellites. In this way, after receiving the second information, the first apparatus may determine the first RNA based on the indication information of the N satellites. In this example, the first apparatus can quickly and accurately determine the first RNA.

Optionally, in the manner c1, for a manner in which the first apparatus receives the second information, refer to the manner a1. Details are not described herein again.

It should be understood that the second information may be carried in existing information, or may be carried in new information. This is not limited in this application.

Manner c2: The first apparatus may determine the first RNA based on mobility of the N satellites at the first moment. In other words, the first RNA is determined based on the mobility of the N satellites at the first moment.

In some possible manners, the first RNA may be an RNA determined when the terminal enters an inactive state from a connected state, and the first apparatus may be an access network device that serves the terminal last time. The first apparatus may determine the first RNA based on the mobility of the N satellites at the first moment and a position 1 at which the terminal enters the inactive state from the connected state. For the mobility of the N satellites, refer to the manner a2. Details are not described herein again. For example, the position 1 at which the terminal enters the inactive state from the connected state is in a service range of a satellite 1. The satellite 1 is a satellite in an orbit 3, and satellites in the orbit 3 include the satellite 1, a satellite 2, and a satellite 3. Therefore, the first apparatus may determine that the first RNA includes a service area corresponding to a part or all of cells of the satellite 1, the satellite 2, and the satellite 3.

S402: The first apparatus determines, based on the first RNA, that a first satellite is a target serving access network device of the terminal, where the first satellite is a satellite among the N satellites corresponding to the first RNA.

In some possible manners, the first satellite is the access network device (referred to as an access network device A for short below) that serves the terminal last time. To be specific, when the N satellites corresponding to the first RNA are satellites in a first orbit, if the terminal does not move or moves in the first RNA, the target serving access network device of the terminal may be the access network device A. In this way, the first satellite (namely, the access network device A) stores a context of the terminal.

Optionally, if the terminal is in the inactive state, any one of the N satellites may not obtain the context of the terminal from another satellite in the N satellites, and a core network device may not update a locally stored context of the terminal, for example, does not update a first parameter. For specific content of the first parameter, refer to the descriptions of the first parameter in the method shown in FIG. 3. Details are not described herein again.

According to the method shown in FIG. 4, an RNA may be used in an NTN communication scenario. In addition, in the method, the first satellite stores the context of the terminal. In this way, when the terminal needs to perform uplink transmission and/or downlink transmission, an access network device other than the first satellite in the first RNA may conveniently obtain the context of the terminal from the first satellite, so that a service can be quickly provided for the terminal, to reduce service transmission latency of the terminal.

In some possible manners, in the method shown in FIG. 3 or FIG. 4, the first apparatus is the terminal. A third satellite is any one of the N satellites, and there is a communication interface between the third satellite and one or more of the N satellites. When the third satellite is a serving access network device of the terminal, and the terminal is no longer located in a service range of the third satellite, the first apparatus may select a satellite in the one or more satellites for communication. For example, the N satellites include the satellite 1, the satellite 2, and the satellite 3. There is a communication interface between the satellite 1 and the satellite 2, and there is a communication interface between the satellite 2 and the satellite 3. The satellite 1 is a serving access network device of the terminal. If the terminal is no longer located in the service range of the satellite 1, the terminal may choose to communicate with the satellite 2. Because there is the communication interface between the satellite 1 and the satellite 2, the satellite 2 may quickly obtain the context of the terminal from the satellite 1, so that a service can be quickly provided for the terminal, to reduce service latency of the terminal.

Currently, when the third satellite is the serving access network device of the terminal, and the terminal is no longer located in the service range of the third satellite, the terminal may perform cell reselection or cell handover. When the terminal performs cell reselection or cell handover, the terminal selects, based on signal quality of a satellite, a target satellite to be reselected or handed over. However, if the target satellite is selected based only on the signal quality, movement directions of the target satellite and the third satellite may be different, and there is no communication interface between satellites whose movement directions are different. Consequently, the terminal quickly falls back to an idle state, for example, falls back from the inactive state to the idle state.

To avoid frequent fallback to the idle state, when the terminal selects a satellite in the one or more satellites for communication, a movement direction of the one or more satellites is the same as the movement direction of the third satellite. For example, when the signal quality is met, the terminal may preferentially select a satellite whose movement direction is the same as that of the third satellite for communication. Both the one or more satellites and the third satellite may be satellites in a descending orbit, or both the one or more satellites and the third satellite may be satellites in an ascending orbit.

In some possible manners, after S302 or S402, if the terminal switches from the inactive state to the active state, a target access network device of the terminal may obtain the context of the terminal from the first satellite. For example, the target access network device of the terminal may obtain the context of the terminal from the first satellite through an Xn interface between the first satellite and the target access network device. Optionally, the target access network device of the terminal may send, to the core network device (for example, an AMF), information indicating to update the context of the terminal, and then the core network device may update the locally stored context of the terminal.

Based on a same technical concept as the method embodiments in FIG. 3 and FIG. 4, an embodiment of this application provides a communication apparatus in FIG. 5, and the communication apparatus may be configured to perform functions of related steps in the foregoing method embodiments. The functions may be implemented by hardware, or may be implemented by software or by hardware executing corresponding software. The hardware or the software includes one or more modules corresponding to the functions. A structure of the communication apparatus is shown in FIG. 5, and includes a communication unit 501 and a processing unit 502. The communication apparatus 500 may be used in the first apparatus in the method shown in FIG. 3 or FIG. 4, and may implement the communication method provided in the foregoing embodiments and instances of this application. The following describes functions of the units in the communication apparatus 500.

The communication unit 501 is configured to receive and send information. In some manners, the communication unit 501 may be implemented through a physical interface, a communication module, a communication interface, and an input/output interface. The communication apparatus 500 may be connected to a network cable or a cable by using the communication unit, to establish a physical connection to another device. In some other manners, the communication unit 501 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 502 may be configured to support the communication apparatus 500 in performing a processing action in the foregoing method embodiments. The processing unit 502 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 500 is used in the first apparatus in the embodiment of this application shown in FIG. 3. The following describes specific functions of the processing unit 502 in this implementation.

The processing unit 502 is configured to: determine a first RNA of a terminal at a first moment, where the first RNA includes a service area corresponding to a part or all of cells of N satellites, and N is a positive integer; determine, based on the first RNA, that one or more first satellites are target serving access network devices of the terminal, where the first satellite is a satellite among the N satellites; and send a context of the terminal to the first satellite through the communication unit 501; or indicate one or more second satellites to send a context of the terminal to the first satellite.

In some possible manners, the processing unit 502 is further configured to determine a second RNA of the terminal at a second moment, where the second RNA is different from the first RNA, the second RNA includes a service area corresponding to a part or all of cells of M satellites, and M is a positive integer.

In some examples, the processing unit 502 may be configured to: before determining the second RNA of the terminal at the second moment, receive first information through the communication unit 501, where the first information includes indication information of the second RNA. In some other examples, the processing unit 502 may be further configured to determine the second RNA based on mobility of the M satellites at the second moment.

In some possible manners, the processing unit 502 may be configured to: before determining the first RNA of the terminal at the first moment, receive second information through the communication unit 501, where the second information includes indication information of the first RNA. In some other possible manners, the processing unit 502 may be further configured to determine the first RNA based on mobility of the N satellites at the first moment.

Optionally, the processing unit 502 is configured to determine, based on an ephemeris of the second satellite and an ephemeris of the first satellite, that the first satellite is the target serving access network device of the terminal.

In some possible designs, the communication apparatus 500 is the first satellite, and the processing unit 502 is further configured to send third information to a core network device through the communication unit 501, where the third information indicates that the first satellite is the target serving access network device of the terminal.

Optionally, a third satellite is any one of the N satellites, and there is a communication interface between the third satellite and one or more of the N satellites.

In some possible designs, the communication apparatus 500 is the terminal, and the processing unit 502 is further configured to: when the third satellite is a serving access network device of the terminal, and the terminal is no longer located in a service range of the third satellite, select a satellite in the one or more satellites for communication.

In another implementation, the communication apparatus 500 is used in the first apparatus in the embodiment of this application shown in FIG. 4. The following describes specific functions of the processing unit 502 in this implementation.

The processing unit 502 is configured to: determine a first radio access network-based notification area RNA of a terminal at a first moment, where the first RNA includes a service area corresponding to a part or all of cells of N satellites, N is a positive integer, and the N satellites are satellites in a first orbit; and determine, based on the first RNA, that one or more first satellites are target serving access network devices of the terminal, where the first satellite is a satellite among the N satellites.

In some possible manners, the processing unit 502 is further configured to: before determining the first RNA of the terminal at the first moment, receive second information through the communication unit 501, where the second information includes indication information of the first RNA, and the indication information of the first RNA includes at least one of the following: indication information of a part or all of the N satellites or indication information of the first orbit.

Optionally, a third satellite is any one of the N satellites, and there is a communication interface between the third satellite and one or more of the N satellites.

In some possible designs, the communication apparatus 500 is the terminal, and the processing unit 502 is further configured to: when the third satellite is a serving access network device of the terminal, and the terminal is no longer located in a service range of the third satellite, select a satellite in the one or more satellites for communication.

For more detailed descriptions of the processing unit 502 and the communication unit 501, refer directly to related descriptions in the method embodiments shown in FIG. 3 and FIG. 4. Details are not described herein.

It should be noted that, in the foregoing embodiments of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 6, and the communication apparatus may be configured to perform related steps in the foregoing method embodiments. The communication apparatus may be used in the first apparatus in the method shown in FIG. 3 or FIG. 4, may implement the communication method provided in the foregoing embodiments and instances of this application, and has a function of the communication apparatus shown in FIG. 5. Refer to FIG. 6. The communication apparatus 600 includes a processor 602. Optionally, the communication apparatus 600 further includes a transceiver 601 and a memory 603. The transceiver 601, the processor 602, and the memory 603 are connected to each other.

Optionally, the transceiver 601, the processor 602, and the memory 603 are connected to each other through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 6, but it does not indicate that there is only one bus or only one type of bus.

The transceiver 601 is configured to receive information and send information, to implement communication interaction with another device. For example, the transceiver 601 may be implemented through a physical interface, a communication module, a communication interface, and an input/output interface.

The processor 602 may be configured to support the communication apparatus 600 in performing a processing action in the foregoing method embodiments. When the communication apparatus 600 is configured to implement the foregoing method embodiments, the processor 602 may be further configured to implement a function of the processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 600 is used in the first apparatus in the embodiment of this application shown in FIG. 3. The following describes specific functions of the processor 602 in this implementation.

The processor 602 is configured to: determine a first RNA of a terminal at a first moment, where the first RNA includes a service area corresponding to a part or all of cells of N satellites, and N is a positive integer; determine, based on the first RNA, that a first satellite is a target serving access network device of the terminal, where the first satellite is a satellite among the N satellites; and send a context of the terminal to the first satellite through the transceiver 601; or indicate a second satellite to send a context of the terminal to the first satellite.

In another implementation, the communication apparatus 600 is used in the first apparatus in the embodiment of this application shown in FIG. 4. The following describes specific functions of the processor 602 in this implementation.

The processor 602 is configured to: determine a first radio access network-based notification area RNA of a terminal at a first moment, where the first RNA includes a service area corresponding to a part or all of cells of N satellites, N is a positive integer, and the N satellites are satellites in a first orbit; and determine, based on the first RNA, that a first satellite is a target serving access network device of the terminal, where the first satellite is a satellite among the N satellites.

For the specific functions of the processor 602, refer to the descriptions of the communication method provided in the foregoing embodiments and instances of this application and the specific function descriptions of the communication apparatus 500 in the embodiment of this application shown in FIG. 5. Details are not described herein again.

The memory 603 is configured to store program instructions, data, and/or the like. Specifically, the program instructions may include program code, and the program code includes computer operation instructions. The memory 603 may include a RAM, or may further include a non-volatile memory (non-volatile memory), for example, at least one magnetic disk memory. The processor 602 executes the program instructions stored in the memory 603, and implements the foregoing functions by using the data stored in the memory 603, to implement the communication method provided in the foregoing embodiments of this application. The memory 603 may be integrated with the processor 602, or may be a memory outside the communication apparatus.

It may be understood that the memory 603 in FIG. 6 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories in the systems and methods described in this specification include but are not limited to these memories and any memory of another proper type.

Based on the foregoing embodiments, an embodiment of this application further provides a computer program product including computer-executable instructions. When the computer program product runs, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be used to carry or store expected program code in a form of instructions or a data structure and can be accessed by the computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus configured to implement a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on a computer or another programmable device to generate computer-implemented processing. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. Therefore, this application is intended to cover these modifications and variations of this application provided that they fall within the scope of the claims of this application and equivalent technologies thereof.

## Claims

1. A communication method, comprising:
determining, by a first apparatus, a first radio access network-based notification area RNA of a terminal at a first moment, wherein the first RNA comprises a service area corresponding to a part or all of cells of N satellites, and N is a positive integer;
determining, by the first apparatus based on the first RNA, that one or more first satellites are target serving access network devices of the terminal, wherein the first satellite is a satellite among the N satellites; and
sending, by the first apparatus, a context of the terminal to the first satellite; or indicating, by the first apparatus, one or more second satellites to send a context of the terminal to the first satellite.

2. The method according to claim 1, further comprising:
determining, by the first apparatus, a second RNA of the terminal at a second moment, wherein the second RNA is different from the first RNA, the second RNA comprises a service area corresponding to a part or all of cells of M satellites, and M is a positive integer.

3. The method according to claim 2, wherein the difference is determined based on mobility of the N satellites and mobility of the M satellites.

4. The method according to claim 2 or 3, wherein before determining, by the first apparatus, the second RNA of the terminal at the second moment, the method further comprises:
receiving, by the first apparatus, first information, wherein the first information comprises indication information of the second RNA.

5. The method according to claim 2 or 3, wherein determining, by the first apparatus, the second RNA of the terminal at the second moment comprises:
determining, by the first apparatus, the second RNA based on the mobility of the M satellites at the second moment.

6. The method according to any one of claims 1 to 5, wherein before determining, by the first apparatus, the first RNA of the terminal at the first moment, the method further comprises:
receiving, by the first apparatus, second information, wherein the second information comprises indication information of the first RNA.

7. The method according to any one of claims 1 to 5, wherein determining, by the first apparatus, the first RNA of the terminal at the first moment comprises:
determining, by the first apparatus, the first RNA based on the mobility of the N satellites at the first moment.

8. The method according to any one of claims 1 to 7, wherein determining, by the first apparatus based on the first RNA, that the one or more first satellites are the target serving access network devices of the terminal comprises:
determining, by the first apparatus based on an ephemeris of the second satellite and an ephemeris of the first satellite, that the first satellite is the target serving access network device of the terminal.

9. The method according to any one of claims 1 to 8, wherein the first apparatus is the first satellite, and the method further comprises:
sending, by the first apparatus, third information to a core network device, wherein the third information indicates that the first satellite is the target serving access network device of the terminal.

10. A communication method, comprising:
determining, by a first apparatus, a first radio access network-based notification area RNA of a terminal at a first moment, wherein the first RNA comprises a service area corresponding to a part or all of cells of N satellites, N is a positive integer, and the N satellites are satellites in a first orbit; and
determining, by the first apparatus based on the first RNA, that one or more first satellites are target serving access network devices of the terminal, wherein the first satellite is a satellite among the N satellites.

11. The method according to claim 10, wherein before determining, by the first apparatus, the first RNA of the terminal at the first moment, the method further comprises:
receiving, by the first apparatus, second information, wherein the second information comprises indication information of the first RNA, and the indication information of the first RNA comprises at least one of the following: indication information of a part or all of the N satellites or indication information of the first orbit.

12. The method according to any one of claims 1 to 11, wherein a third satellite is any one of the N satellites, and there is a communication interface between the third satellite and one or more of the N satellites.

13. The method according to claim 12, wherein the first apparatus is the terminal, and the method further comprises:
when the third satellite is a serving access network device of the terminal, and the terminal is no longer located in a service range of the third satellite, selecting, by the first apparatus, a satellite in the one or more satellites for communication.

14. The method according to claim 13, wherein a movement direction of the one or more satellites is the same as a movement direction of the third satellite.

15. A communication apparatus, comprising:
a communication unit, configured to receive and send information; and
a processing unit, configured to perform the method according to any one of claims 1 to 14 by using the communication unit.

16. A communication apparatus, comprising a processor, wherein the processor is configured to perform the method according to any one of claims 1 to 14.

17. A communication system, comprising a first apparatus, wherein the first apparatus is configured to perform the method according to any one of claims 1 to 14.

18. A computer-readable storage medium, wherein the computer-readable storage medium stores a computer program or instructions, and when the computer program or the instructions are executed by a communication apparatus, the method according to any one of claims 1 to 14 is implemented.

19. A chip, wherein the chip reads a computer program stored in a memory, to perform the method according to any one of claims 1 to 14.

20. A computer program product, wherein the computer program product comprises computer program code, and when the computer program code is run, the method according to any one of claims 1 to 14 is implemented.
